# EUROPEAN PATENT SPECIFICATION

(11) **EP 0 467 264 B1**
(45) Date of publication and mention of the grant of the patent: **13.07.1994**
(21) Application number: 91111769.5
(22) Date of filing: 15.07.1991
(51) Int. Cl.: H05K 5/00

(54) **Cabinet structure of facsimile apparatus**
Gehäusestruktur für eine Bildübertragungsvorrichtung
Structure de boîtier pour un appareil à facsimilé

(30) Priority: 18.07.1990 JP 76970/90 U
(43) Date of publication of application: 22.01.1992
(73) Proprietor: SHARP KABUSHIKI KAISHA, Osaka 545 (JP)
(72) Inventor: Tanaka, Hironori, Yamato-Koriyama-shi, Nara-ken (JP); Fujii, Mamoru, Nara-shi, Nara-ken (JP); Kariya, Hiroo, Ikoma-gun, Nara-ken (JP); Matsumoto, Masafumi, Takaichi-gun, Nara-ken (JP)
(74) Representative: TER MEER STEINMEISTER & PARTNER GbR

(56) References cited:
- EP-A- 0 178 800
- US-A- 3 564 112
- US-A- 4 307 264

## Description

### BACKGROUND OF THE INVENTION

### 1. Field of the Invention

The present invention relates to a cabinet structure of a facsimile apparatus, and more particularly to the cabinet structure which is integrally molded to have a pair of frames for holding components such as rollers and a gear accommodated inside of the cabinet itself, and a paper guide for guiding a sheet of paper on which graphic or writing to be transmitted is described (referred to as an original).

### 2. Description of the Prior Art

The inventors of the present invention know that the facsimile apparatus, in general, includes a cabinet which is an exterior component and a pair of right and left frames for holding various components such as rollers and a gear accommodated in the cabinet itself and that the cabinet and the pair of frames are composed of independent components. That is, the pair of right and left frames are coupled by a middle frame. Some components such as a motor for driving rollers, a gear for transmission and an optical system for reading an original are attached to the coupled frames. The resulting frames are screwed to the cabinet. Then, a guide for an original is attached to the frames screwed to the cabinet.

Since, however, those components such as the cabinet, the frames and the guide for the original are separate units, the necessary components are so increased in number that the assembling operation needs a long time accordingly.

### SUMMARY OF THE INVENTION

In order to overcome the shortcoming, it is therefore an object of the present invention to provide a cabinet structure of a facsimile apparatus which includes smaller number of components than the known structure for reducing the operation time for assembling the cabinet structure.

The object of the invention can be achieved by a cabinet structure of a facsimile apparatus for accommodating components included in the facsimile apparatus, including a cabinet base on which the components are mounted, a pair of frames for supporting the components, and a guide for guiding an original. The guide is integrally molded with the cabinet base and the pair of frames.

The integral molding of the structure having the cabinet base, the pair of frames and guide results in reducing the components in number in comparison with the foregoing known structure and the time needed for the assembling operation accordingly.

Further objects and advantages of the present invention will be apparent from the following description of the preferred embodiment of the invention as illustrated in the accompanying drawings.

### BRIEF DESCRIPTION OF THE DRAWINGS

Fig.1 is a perspective view showing a cabinet structure of a facsimile apparatus according to an embodiment of the present invention;
Fig.2 is a perspective view showing a bottom side of the cabinet structure shown in Fig.1; and
Fig.3 is a perspective view showing the cabinet structure having components attached from the bottom side.

### DESCRIPTION OF THE PREFERRED EMBODIMENTS

Hereinafter, an embodiment of the present invention will be described with reference to the drawings.

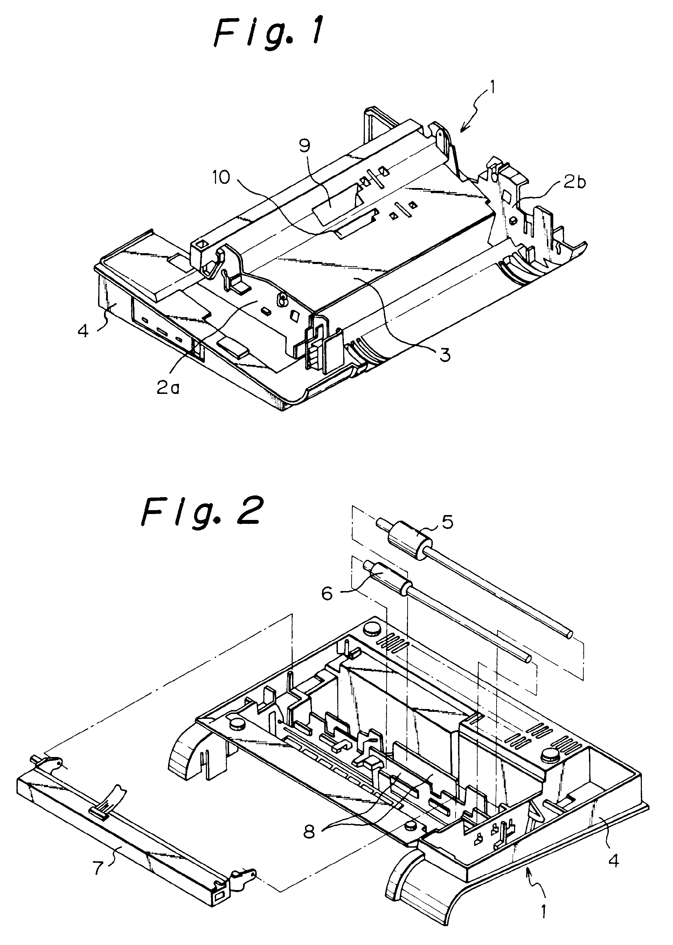

Fig.1 is a perspective view showing a cabinet structure of a facsimile apparatus according to an embodiment of the invention.

As shown in Fig.1, a cabinet structure 1 including a pair of right and left frames 2a and 2b for supporting components such as rollers, a gear and a motor, a paper guide 3 for guiding an original, and a cabinet base 4 is integrally molded by using the same resin material, for example, an ABS (Acrylonitrile-Butadiene-Styrene) resin. That is, the pair of right and left frames 2a and 2b, the paper guide 3 and the cabinet base 4 are adhered by the ABC resin.

Unlike the foregoing prior art in which the components are successively attached on the top side of the cabinet base, as shown in Fig.2, a feeding roller 5 for feeding an original, a conveying roller 6 for conveying the original, and a sensor 7 for reading the original are mounted from the bottom side of the integrally molded cabinet structure 1. Ribs 8 for reinforcement are arranged upright on the bottom side of the cabinet structure 1. After the necessary components are attached to the bottom side, a bottom plate having an IC (Integral Circuit) board mounted thereon (not shown) is attached to the bottom side and closes an opening of the cabinet base 4.

As shown in Fig.1, the paper guide 3 has openings 9 and 10 which are formed to respectively allow the parts of the feeding roller 5 and the conveying roller 6 attached from the bottom side of the cabinet base 4 to face to the top side served as a guiding surface of the paper guide 3. Hence, those rollers serve to convey the original toward the sensor 7 along the guiding surface.

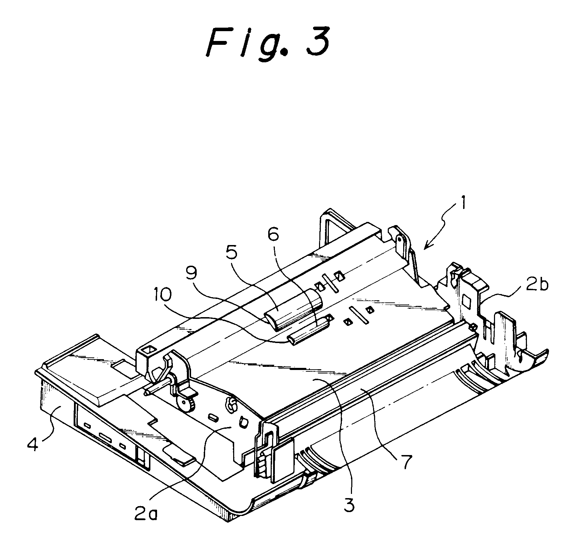

Fig.3 is a perspective view showing the cabinet bottom on which the feeding roller 5, the conveying roller 6 and the sensor 7 are attached.

As shown in Fig.3, since the bottom side of the cabinet structure is where the feeding roller 5 and the conveying roller 6 are attached, the paper guide 3 is allowed to be integrally molded with the cabinet base 4.

In the state shown in Fig.3, there are sequentially mounted the other components such as a driving motor, paper-back pressing rollers for pressing the original against the sensor, a thermal head for writing the data on a recording paper, and a platen roller for pressing the recording paper on the thermal head.

## Claims

1. A cabinet structure (1) of a facsimile apparatus for accommodating components included in said facsimile apparatus, characterized in that said cabinet structure comprises:
a cabinet base (4) on which said components are mounted;
a pair of frames (2a, 2b) for supporting said components; and
a guide (3) for guiding an original, said guide being integrally molded with said cabinet base and said pair of frames.

2. A cabinet structure according to claim 1, characterized in that said guide (3) has openings (9, 10), and characterized in that said facsimile apparatus comprises a feed roller for feeding said original and a conveying roller for conveying said original, said openings being formed to allow said feeding roller and said conveying roller attached from a bottom side of said cabinet base (4) to face to the top side.

3. A cabinet structure according to claim 1, characterized in that said cabinet base (4) provides a plurality of ribs for reinforcement on the bottom side of said cabinet base.

4. A cabinet structure according to claim 1, characterized in that said cabinet base (4), said pair of frames (2a, 2b) and said guide (3) are integrally molded by an Acrylonitrile-Butadiene-Styrene resin.

## Patentansprüche

1. Gehäuse (1) für eine Bildübertragungsvorrichtung zur Aufnahme von zur Bildübertragungsvorrichtung gehörenden Komponenten, **gekennzeichnet durch**
eine Grundeinheit (4), auf der die Komponenten befestigt sind;
ein Rahmenpaar (2a, 2b) zum Tragen der Komponenten; und durch
eine einstückig mit der Grundeinheit und dem Rahmenpaar ausgebildete Führung (3) zum Führen eines Originals.

2. Gehäuse nach Anspruch 1, **dadurch gekennzeichnet**, daß die Führung (3) Öffnungen (9, 10) aufweist und daß die Bilderzeugungseinrichtung eine Zuführwalze zum Zuführen des Originals sowie eine Transportwalze zum Transportieren des Originals aufweist, wobei die Öffnungen so ausgebildet sind, daß die Zuführwalze und die Transportwalze, die von einer Unterseite der Grundeinheit (4) her angebracht sind, der Oberseite gegenüberstehen.

3. Gehäuse nach Anspruch 1, **dadurch gekennzeichnet**, daß die Grundeinheit (4) auf ihrer Unterseite eine Mehrzahl von Rippen zur Verstärkung aufweist.

4. Gehäuse nach Anspruch 1, **dadurch gekennzeichnet**, daß die Grundeinheit (4), das Rahmenpaar (2a, 2b) und die Führung (3) einstückig aus einem Acrylnitril-Butadien-Styrol-Kunstharz gebildet sind.

## Revendications

1. Une structure de boîtier (1) pour un appareil à facsimilé pour loger des composants inclus dans ledit appareil à facsimilé, caractérisée en ce que ladite structure de boîtier comprend :
une base de boîtier (4) sur laquelle sont montés les dits composants ;
une paire de cadres (2a, 2b) pour maintenir les dits composants ;
et
un guide (3) pour guider un original, ledit guide étant moulé d'une seule pièce avec ladite base de boîtier et ladite paire de cadres.

2. Une structure de boîtier selon à la revendication 1, caractérisée en ce que ledit guide (3) présente des ouvertures (9, 10), et caractérisée en ce que ledit appareil à facsimilé comprend un rouleau d'alimentation pour amener ledit original et un rouleau de transport pour transporter ledit original, lesdites ouvertures étant formées de manière à permettre au dit rouleau d'alimentation et au dit rouleau de transport fixés à partir d'une face inférieure de ladite base de boîtier (4) de faire face au côté supérieur.

3. Une structure de boîtier selon la revendication 1, caractérisée en ce que ladite base de boîtier (4) présente une pluralité de nervures de renforcement sur la face inférieure de ladite base de boîtier.

4. Une structure de boîtier selon la revendication 1, caractérisée en ce que ladite base de boîtier (4), ladite paire de cadres (2a, 2b) et ledit guide (3) sont moulés d'une seule pièce par une résine acrylnitrile-styrène-butadiène.
